# EUROPÄISCHE PATENTSCHRIFT

(11) **EP 0 883 228 B1**
(45) Veröffentlichungstag und Bekanntmachung des Hinweises auf die Patenterteilung: **30.03.2005**
(21) Anmeldenummer: 97108852.1
(22) Anmeldetag: 03.06.1997
(51) Int. Cl.: H02K 9/16, H02K 9/14, H02K 5/20, H02K 11/00

(54) **Elektro-Motor**
Electric motor
Moteur électrique

(43) Veröffentlichungstag der Anmeldung: 09.12.1998
(73) Patentinhaber: Frankl & Kirchner GmbH. & Co. KG Fabrik für Elektromotoren und elektrische Apparate, D-68723 Schwetzingen (DE)
(72) Erfinder: Faulhaber, Michael, 68199 Mannheim (DE); Ripplinger, Walter, 68794 Rheinhausen (DE)
(74) Vertreter: Rau, Manfred, Dr. Dipl.-Ing.

(56) Entgegenhaltungen:
- EP-A- 0 433 247
- DE-C- 19 607 882
- DE-U- 29 700 643

## Beschreibung

Die Erfindung betrifft einen Elektro-Motor nach dem Oberbegriff des Anspruches 1. Derartige Motoren weisen in der Regel einen Flansch auf, der den Stator nur in den Eckbereichen überragt. Es wird als unbefriedigend empfunden, daß ein am anderen Ende angebrachter Lüfter den durch den Flansch vorgegebenen Querschnitt überragt, was zu Montageproblemen, beispielsweise beim Einsatz an Nähmaschinen führt, wo diese Motoren als Positionierantriebe eingesetzt werden.

Aus der EP 0 433 247 A1 ist ein Elektro-Motor nach dem Oberbegriff des Anspruches 1 bekannt, dessen Stator von einem Statorgehäuse umgeben ist, in dem Kanäle ausgebildet sind, durch die die Kühlluft geführt wird. Der Lüfter einschließlich der Lüfterhaube stehen erheblich über den Stator vor. An der Unterseite des Gehäuses ist ein Befestigungsflansch vorgesehen, der Öffnungen für Befestigungsschrauben aufweist. Auf eine kompakte Bauweise ist bei diesem Motor nicht Wert gelegt.

Aus DE 297 00 643 U1 ist ein Motor bekannt, an den ein gesonderter Lüftermotor angeschlossen ist, an dem wiederum ein Ist-Wert-Geber angeordnet ist. Axial hierzu versetzt ist ein Lüfterrad vorgesehen. Auch hier ist auf eine kompakte Bauweise kein Wert gelegt.

Aus DE 196 07 882 C1 ist es bekannt, an einem Motor ein den Stator umgebendes Statorgehäuse mit Kühlrippen vorzusehen, dem in axialer Richtung ein Lüfterrad vorgeordnet ist, mittels dessen Kühlluft längs der Rippen des Gehäuses geblasen wird. Auch hierbei ist auf eine kompakte Bauweise kein Wert gelegt.

Der Erfindung liegt die Aufgabe zugrunde, einen Elektro-Motor der gattungsgemäßen Art so auszugestalten, daß der Lüfter den Flansch im Querschnitt nicht überragt, und daß die Baulänge des Motors möglichst kurz ist.

Diese Aufgabe wird erfindungsgemäß durch die Merkmale im Kennzeichnungsteil des Anspruches 1 gelöst. Der Lüfter kann einen Querschnitt aufweisen, der maximal dem des Flansches entspricht. Die Austrittsöffnungen des Lüfters fluchten mit den Bereichen des Flansches, die über die Außenkontur des Stators vorragen. Die aus dem Lüfter ausströmende Luft streicht an der Außenkontur des Stators entlang. Durch den Lüfter wird die Baulänge des Motors, trotz des Vorhandenseins des Ist-Wert-Gebers, kaum verlängert. Der Lüfter erstreckt sich nicht über den vom Flansch vorgegebenen Maximalquerschnitt des Motors hinaus.

Zahlreiche vorteilhafte und teilweise erfinderische Weiterbildungen ergeben sich aus den Unteransprüchen.

Weitere Merkmale, Vorteile und Einzelheiten der Erfindung ergeben sich aus der folgenden Beschreibung eines Ausführungsbeispieles anhand der Zeichnungen. Es zeigt:
- Fig. 1: einen Längsschnitt durch einen Elektro-Motor nach der Erfindung,
- Fig. 2: eine Stirnansicht des abtriebsseitigen Lagerschildes entsprechend dem Sichtpfeil II in Fig. 1in teilweise aufgebrochener Darstellung,
- Fig. 3: eine Stirnansicht des Lüfters entsprechend dem Sichtpfeil III in Fig. 1,

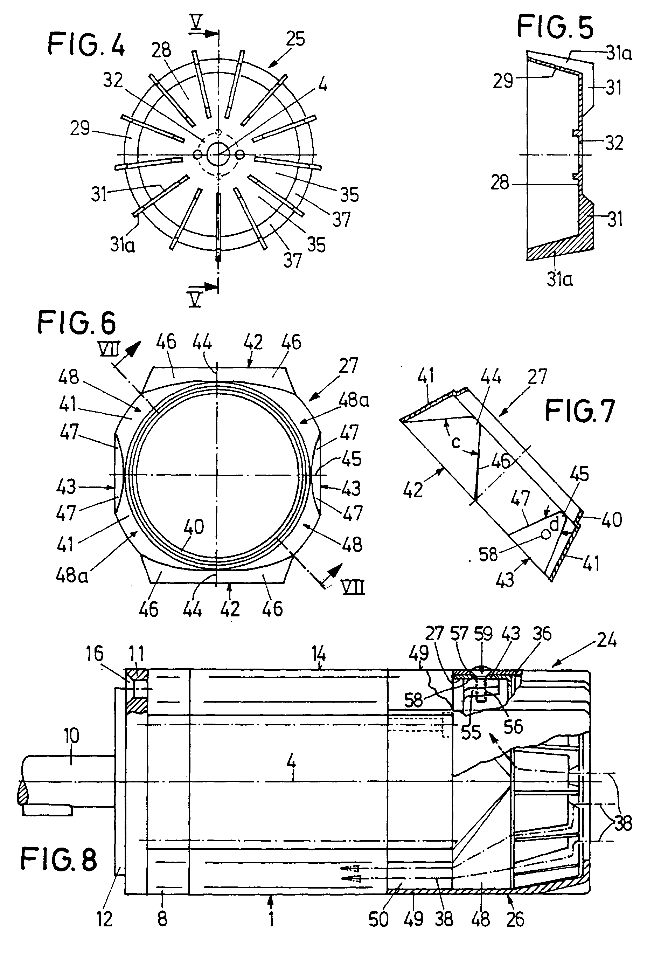

- Fig. 4: eine Draufsicht auf ein Lüfterrad,
- Fig. 5: einen Querschitt durch das Lüfterrad gemäß der Schnittlinie V-V in Fig. 4,
- Fig. 6: eine Stirnansicht eines Luftleitschirmes,
- Fig. 7: einen Schnitt durch den Luftleitschirm gemäß der Schnittlinie VII-VII in Fig. 6, und
- Fig. 8: eine Draufsicht auf den Elektro-Motor gemäß dem Sichtpfeil VIII in Fig. 1 mit teilweise aufgebrochener Lüfterhaube.

Der in der Zeichnung dargestellte Motor weist einen Stator 1 auf, von dem ein lamelliertes Blechpaket 2 und von Wicklungen die Wickelköpfe 3 sichtbar sind. Das Blechpaket 2 ist mittels sich parallel zur Mittel-Längs-Achse des Motors erstreckender Zuganker-Schrauben 5 zusammengehalten. Im Stator 1 ist konzentrisch mit der Achse 4 eine Welle 6 angeordnet, die mittels Wälzlagern 7 in Lagerschilden 8, 9 drehbar gelagert ist. Diese Lagerschilde 8, 9 decken die Wickelköpfe 3 ab und sind mit dem Stator 1 ebenfalls mittels der Zuganker-Schrauben 5 verbunden.

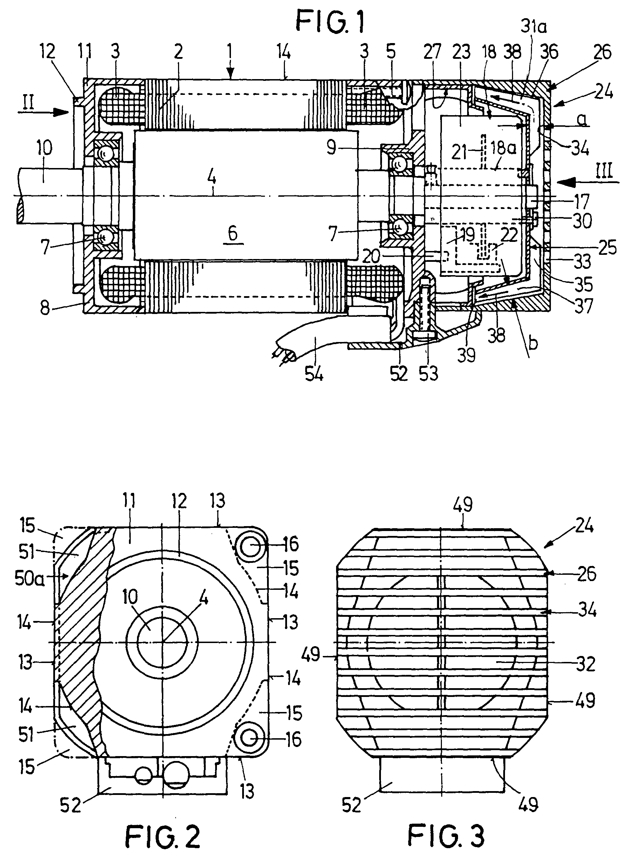

Aus dem abtriebsseitigen Lagerschild 8 tritt konzentrisch zur Achse 4 ein mit der Welle 6 verbundener Antriebs-Wellen-Zapfen 10 heraus. Der Lagerschild 8 ist weiterhin mit einem etwa quadratischen Flansch 11 versehen. Konzentrisch zur Achse 4 ist am Flansch 11 ein von diesem vorspringender Zentrier-Ringsteg 12 ausgebildet. Wie Fig. 2 entnehmbar ist, verlaufen die Seitenkanten 13 des Flansches 11 jeweils etwa tangential zu der gestrichtelt in Fig. 3 dargestellten Außenkontur 14 des Stators 1. Lediglich in den Eckbereichen 15 der Seitenkanten 13 steht der Flansch 11 über die Außenkontur 14 des Stators 1 vor. In diesen Eckbereichen 15 ist jeweils eine außerhalb der Außenkontur 14 liegende Bohrung 16 im Flansch 11 ausgebildet. Durch diese Bohrungen 16 können Schrauben hindurchgeführt werden, mittels derer der Motor an einer Halterung, beispielsweise einer Nähmaschine, befestigt werden kann.

Der dem abtriebsseitigen Lagerschild 8 entgegengesetzt angeordnete Lagerschild 9 ist ein lüfterseitiger Lagerschild 9. In diesem Bereich ragt ein Wellenzapfen 17 der Welle 6 aus dem Lagerschild 9 hervor, der einen Ist-Wert-Geber 18 antreibt. Dieser Ist-Wert-Geber 18 ist in üblicher Weise aufgebaut, d.h. er weist eine Trageinheit 19 auf, die mittels eines Federelementes 20 drehfest, also undrehbar, mit dem Lagerschild 9 verbunden ist. Der Ist-Wert-Geber 18 weist eine mit der Welle 6 rotierende Blendenscheibe 21 auf, die durch Sensoren 22 läuft. Die Trageinheit 19 mit der Sensoren 22 und die Scheibe 21 sind von einem Geber-Gehäuse 23 überdeckt, das mit dem Lagerschild 9 drehfest verbunden ist. Bei Drehungen der Welle 6 werden durch das Zusammenwirken der Blendenscheibe 21 und der Sensoren 22 Signale erzeugt, die zum einen die Winkelposition der Welle 6 und zum anderen ihre Drehzahl repräsentieren. Dieses Prinzip eines derartigen Ist-Wert-Gebers 18 ist allgemein bekannt.

Der Ist-Wert-Geber 18 ist von einem Lüfter 24 umgeben. Dieser Lüfter besteht im wesentlichen aus einem Lüfterrad 25, einer Lüfterhaube 26 und einem Luftleitschirm 27.

Das Lüfterrad 25 ist topfförmig ausgebildet, d.h. es weist einen radial zur Achse 4 verlaufenden Scheiben-Abschnitt 28 und einen sich an dessen Außenrand anschließenden Kegelstumpf-Abschnitt 29 auf. Der Scheiben-Abschnitt 28 ist mittels Schrauben 30 an eine sich mit der Welle 6 drehenden Nabe 18a des Ist-Wert-Gebers 18 angeschraubt, dreht sich also mit diesem. Der Scheiben-Abschnitt 28 weist in seinem radial außenliegenden Bereich radial zur Achse 4 verlaufende Schaufeln 31 auf, die sich auf dem Kegelstumpfabschnitt 29 in Schaufeln 31a fortsetzen. Innerhalb der Schaufeln 31, also im mittleren Bereich des Scheiben-Abschnitts 28, befindet sich ein Ansaugbereich 32 des Lüfters 24, dem eine Ansaugöffnung 33 an der Lüfterhaube 26 zugeordnet ist. Die Lüfterhaube 26 umgibt die Schaufeln 31, 31a mit geringem Spiel, so daß zwischen dem Scheiben-Abschnitt 28, den Schaufeln 31 und der Stirnwand 34 der Lüfterhaube 26 Radialkanäle 35 gebildet werden, deren Höhe a in Richtung der Achse 4 konstant ist. Zwischen dem Kegelstumpf-Abschnitt 29, den auf diesem angeordneten Schaufeln 31a und der diese umgebenden Außenwand 36 der Lüfterhaube 26 werden Radial-AxialKanäle 37 begrenzt, deren Erstreckung stärker axial, d.h. in Richtung der Achse 4 als radial zu ihr verläuft. Die Höhe b dieser Kanäle 37 nimmt in Strömungsrichtung 38, d.h in Richtung zum Stator 1 hin ab, so daß sich insgesamt der Querschnitt dieser Kanäle 37 zu ihrem Auslaß 39 hin verengt. Da die Schaufeln 31 und 31a zumindest teilweise radial zur Achse 4 verlaufen, ist der Lüfter 24 drehrichtungsunabhängig. Zwischen dem Lüfterrad 25 und dem lüfterseitigen Lagerschild 9 ist der Luftleitschirm 27 angeordnet.

Der Luftleitschirm 27 weist einen inneren Ringsteg 40 auf, der den Kegelstumpf-Abschnitt 29 des Lüfterrades 25 im Bereich der Auslässe 39 untergreift. Von diesem Ringsteg 40 aus erstreckt sich ein sich leicht radial nach außen zum Stator 1 hin erweiternder Wandabschnitt 41. Auf diesem Wandabschnitt 41 sind insgesamt 4 in der Draufsicht jeweils keilförmige Erhöhungen 42, 43 ausgebildet, deren leicht abgerundetes spitzes Ende 44 bzw. 45 dem Lüfterrad 25 zugewandt sind. Jeweils gleiche keilförmige Erhebungen 42 bzw. 43 liegen einander diamentral gegenüber, wobei die keilförmigen Erhöhungen 42, die jeweils oben und unten angeordnet sind breiter sind, also einen größeren Öffnungswinkel c aufweisen als die seitlich angeordneten keilförmigen Erhöhungen 43, deren Öffnungswinkel d kleiner ist als c. Die keilförmigen Erhöhungen 42 bzw. 43 weisen sich unter dem jeweiligen Öffnungswinkel c bzw. d von ihrem Ende 44 bzw. 45 weg in Richtung zum Stator 1 erstreckende Kanal-Seitenwände 46 bzw. 47 auf. Auf den Erhöhungen 42, 43 liegt dicht die Außenwand 36 der Lüfterhaube 26 an. Zwischen jeweils dem Wandabschnitt 41, einer Kanal-Seitenwand 46, einer Kanal-Seitenwand 47 und der Außenwand 36 der Lüfterhaube 26 ist ein Führungskanal 48 bzw. 48a ausgebildet, wobei die einander benachbarten Führungskanäle 48 bzw. 48a spiegelsymetrisch zueinander ausgebildet und angeordnet sind.

Wie den Fig. 2 und 3 entnehmbar ist, weist die Lüfterhaube 26 einen Querschnitt auf, der nicht über die Seitenkanten 13 des Flansches 11 hinausgeht. Die geradlinigen Seitenkanten 49 der Lüfterhaube 26 decken sich mit den Seitenkanten 13 des Flansches, d.h. die Außenkontur 14 des Stators 1 ragt auch nicht über diese hinaus. In dem Bereich der Lüfterhaube 26, der mit den Eckbereichen 15 des Flansches 11 jeweils fluchtet, gehen die Führungskanäle 48, 48a in im Querschnitt gleichbleibende, parallel zur Achse 4 verlaufende Austrittskanäle 50, 50a über, die zwischen der Außenwand 36 der Lüfterhaube 26 und dem lüfterseitigen Lagerschild 9 ausgebildet sind. Diese Austrittskanäle 50 haben zum Stator 1 hin offene Austrittsöffnungen 51.

Beim Betrieb des Motors, also bei einer Rotation der Welle 6 und damit des Lüfterrades 25, wird Luft entsprechend der Strömungsrichtung 38 durch die Ansaugöffnung 33 in der Lüfterhaube 26 angesaugt und strömt vom Ansaugbereich 32 der Lüfterrades 25 unter entsprechender Beschleunigung radial zur Achse 4 durch die Radialkanäle 35 und von dort durch die Radial-Axial-Kanäle 37, wobei aufgrund der geschilderten Verengung dieser Kanäle in Strömungsrichtung 38 eine weitere Beschleunigung der Luft in Strömungsrichtung 38 erfolgt. In den sich in Strömungsrichtung 38 verengenden Führungskanälen 48, 48a erfolgt eine weitere Beschleunigung der Luft, die in den Austrittskanälen 50, 50a in eine parallel zur Achse 4 verlaufende Strömungsrichtung 38 umgelenkt werden. Die Luft strömt aus den Austrittsöffnungen 51 heraus und dann am Stator 1 entlang und kühlt diesen. Wie aus der Zeichnung hervorgeht, wird durch den Lüfter 24 die Baulänge des Motors, die sich ohnehin bis zum Ist-Wert-Geber 18 einschließlich erstreckt, kaum verlängert. Der Lüfter 24 erstreckt sich nicht über den vom Flansch 11 vorgegebenen Maximalquerschnitt des Motors.

Der Vollständigkeit halber sei erwähnt, daß ein Kabeldeckel 52 mittels einer Schraube 53 am lüfterseitigen Lagerschild 9 befestigbar ist, durch den eine elektrische Versorgungsleitung 54 für den Motor und eine nicht dargestellte Leitung des Ist-Wert-Gebers 18 abgedeckt und festgelegt werden. Der Stator 1 kann selbstverständlich auch von einem Gehäuse umgeben sein.

Die Lüfterhaube 26 ist auf dem lüfterseitigen Lagerschild 9 so befestigt, daß sie wesentlich zur Wärmeableitung beiträgt. Hierzu sind am Lagerschild 9 zwei vorspringende Befestigungsstege 55 ausgebildet, die mit je einer radial zur Achse 4 verlaufenden Gewindebohrung 56 versehen sind. Die Außenwand 36 der Lüfterhaube 26 ist mit je einer zugeordneten Bohrung 57 versehen. Der Luftleitschirm 27 ist im Bereich der keilförmigen Erhöhungen 43 mit je einer zugeordneten Bohrung 58 versehen. Durch die Bohrungen 57, 58 wird jeweils eine Senkkopf-Schraube 59 in die zugeordnete Gewindebohrung 56 geschraubt. Da die Bohrungen 58 geringfügig, beispielsweise um 0,1 mm in ihrer Fluchtung gegenüber der Gewindebohrung 56 in Richtung zur Ansaugöffnung 33 versetzt sind, wird die Lüfterhaube 26 beim Anziehen der Schrauben 59 in Richtung zum Stator 1 gepresst, wodurch eine besonders feste und großflächige Verbindung mit dem Lagerschild 9 hergestellt wird. Dadurch wird ein guter Wärmeübergang vom Stator 1 über dem lüfterseitigen Lagerschild 9 zur Lüfterhaube 26 erreicht, so daß die den Lüfter 24 in Strömungsrichtung 38 durchströmende Kühlluft bereits im Lüfter 24 selbst einen Teil der vom Stator 1 abgegebenen Wärme übernimmt.

Damit ein guter Wärmefluß stattfindet, bestehen nicht nur die Lagerschilde 8, 9, sondern auch der Lüfter 24 zumindest im wesentlichen aus Metall, das über eine gute Wärmeleitfähigkeit verfügt.

## Patentansprüche

1. Elektro-Motor
mit einem Stator (1) mit einer Mittel-Längs-Achse (4) und einer Außenkontur (14),
mit einer zur konzentrisch zur Achse (4) im Stator (1) angeordneten Welle (6),
mit einem abtriebsseitigen Lagerschild (8) und einem lüfterseitigen Lagerschild (9), in denen die Welle (6) gelagert ist,
mit einem am abtriebsseitigen Lagerschild (8) vorgesehenen Flansch (11) der über die Außenkontur (14) des Stators (1) vorragende Eckbereiche (15) aufweist, und
mit einem dem lüfterseitigen Lagerschild (9) benachbarten Lüfter (24), der ein mit der Welle (6) in Drehverbindung gekoppeltes Lüfterrad (25) und eine den Lüfter (24) nach außen abdeckende, Lüfterhaube (26) aufweist, wobei das Lüfterrad (25) topfförmig ausgebildet ist,
mit einem sich radial zur Achse (4) erstreckenden Scheiben-Abschnitt (28) und einem sich zum Stator (1) hin erweiternden Kegelstumpf-Abschnitt (29), an denen Schaufeln (31, 31a) vorgesehen sind,
**dadurch gekennzeichnet, daß** der Lüfter (24) mit den Eckbereichen (15) des Flansches (11) fluchtende, zum Stator hin gerichtete Luft-Austrittsöffnungen (51) aufweist,
**daß** benachbart zum lüfterseitigen Lagerschild (9) ein mit der Welle (6) gekoppelter Ist-Wert-Geber (18) vorgesehen ist, der vom Lüfter (24) topfförmig umgeben ist,
**daß** zwischen dem Lüfterrad (25) und den Austrittsöffnungen (51) ein gegenüber dem Stator (1) undrehbarer Luftleitschirm (27) angeordnet ist, der sich in Richtung zu den Austrittsöffnungen (51) verengende Führungskanäle (48, 48a) begrenzt,
**daß** die Seitenkanten (13) des Flansches (11) etwa tangential zur Außenkontur (14) des Stators ( 1 ) verlaufen,
**daß** in den über die Außenkontur (14) des Stators (1) vorragenden Eckbereichen (15) des Flansches (11) jeweils eine Bohrung (16) für Befestigungsschrauben ausgebildet ist und
**daß** die Lüfterhaube (26) nicht über die Seitenkanten (13) des Flansches (11) vorsteht.

2. Elektro-Motor nach Anspruch 1, **dadurch gekennzeichnet,**
**daß** zwischen dem Scheiben-Abschnitt (28), den radial verlaufenden Schaufeln (31) und einer Stirnwand (34) der Lüfterhaube (26) Radialkanäle (35) und zwischen dem Kegelstumpf-Abschnitt (29), den hierauf angebrachten Schaufeln (31a) und einer Außenwand (36) der Lüfterhaube (26) sich an die Radialkanäle (35) anschließende Radial-Axial-Kanäle (37) ausgebildet sind.

3. Elektro-Motor nach Anspruch 2, **dadurch gekennzeichnet,**
**daß** die Radialkanäle (35) in Richtung der Achse (4) eine gleichbleibende Höhe (a) aufweisen.

4. Elektro-Motor nach Anspruch 2 oder 3, **dadurch gekennzeichnet,**
**daß** die Höhe (b) der Radial-Axial-Kanäle (37) in Richtung zum Stator (1) hin abnimmt.

5. Elektro-Motor nach einem der Ansprüche 2 bis 4, **dadurch gekennzeichnet, daß** der Querschnitt der Radial-Axial-Kanäle (37) in Richtung zum Stator (1) hin abnimmt.

6. Elektro-Motor nach Anspruch 1, **dadurch gekennzeichnet,**
**daß** die Führungskanäle (48, 48a) nach außen durch die Außenwand (36) der Lüfterhaube (26) begrenzt sind.

7. Elektro-Motor nach Anspruch 1 oder 6, **dadurch gekennzeichnet,**
**daß** die Führungskanäle (48, 48a) zwischen einem sich zum Stator (1) hin erweiternden Wandabschnitt (41) und keilförmigen Erhöhungen (42, 43) des Luftleitschirms (27) ausgebildet sind.

8. Elektro-Motor nach Anspruch 1 oder 7, **dadurch gekennzeichnet,**
**daß** zwischen den Führungskanälen (48, 48a) und den Austrittsöffnungen (51) parallel zur Achse (4) verlaufende Austrittskanäle (50, 50a) ausgebildet sind.

9. Elektro-Motor nach einem der Ansprüche 1 bis 8, **dadurch gekennzeichnet,**
**daß** der Lüfter (24) großflächig mit dem lüfterseitigen Lagerschild (9) verbunden ist.

## Claims

1. An electric motor, comprising
a stator (1) having a central longitudinal axis (4) and an outline (14),
a shaft (6) disposed concentrically of the axis (4) in the stator (1),
an end shield (8) on the drive side and an end shield (9) on the ventilator side (9), in both of which the shaft (6) is run,
a flange (11), which is provided on the end shield (8) on the drive side and which has comer portions (15) projecting over the outline (14) of the stator (**1**), and
a ventilator (24), which is adjacent to the end shield (9) on the ventilator side, and which comprises a ventilator wheel (25) coupled for rotation with the shaft (6) and a ventilator cowl (26) covering the ventilator (24) outwardly,
wherein the ventilator wheel (25) is cup-shaped, having a disk section (28) radial to the axis (4) and a truncated cone section (29) expanding toward the stator (1), blades (31, 31a) being provided on these sections, **characterized**
**in that** the ventilator (24) comprises air outlets (51) directed toward the stator and in alignment with the comer portions (15) of the flange (11),
**in that** an actual value transmitter (18) is provided in vicinity to the end shield (9) on the ventilator side, the ventilator (24) surrounding it in the way of a cup,
**in that** between the ventilator wheel (25) and the outlets (51), an air conduction screen (27) is disposed, which is non-rotatable relative to the stator (1) and which defines guide channels (48, 48a) narrowing in the direction toward the outlets (51),
**in that** the lateral edges (13) of the flange (11) are each approximately tangential to the outline (14) of the stator (1),
**in that** in each comer portion 15 of the flange 11 projecting over the outline 14 of the stator 1, a drilled hole 16 is formed for attachment screws, and
**in that** the ventilator cowl 26 does not project over the lateral edges (13) of the flange (11).

2. An electric motor according to claim 1, **characterized in that** radial channels (35) are formed between the disk section (28), the radial blades (31) and a front wall (34) of the ventilator cowl (26), and radial/axial channels (37) adjoining the radial channels (35) are formed between the truncated cone section (29), the blades (31a) mounted thereon and an outer wall (36) of the ventilator cowl (26).

3. An electric motor according to claim 2, **characterized in that** the radial channels (35) have a height (a) constant in the direction of the axis (4).

4. An electric motor according to claim 2 or 3, **characterized in that** the height (b) of the radial/axial channels (37) decreases in the direction toward the stator (1).

5. An electric motor according to one of claims 2 to 4, **characterized in that** the cross-section of the radial/axial channels (37) decreases in the direction toward the stator (1).

6. An electric motor according to claim 1, **characterized in that** externally, the guide channels (48, 48a) are defined by the outer wall (36) of the ventilator cowl (26).

7. An electric motor according to claim 1 or 6, **characterized in that** the guide channels (48, 48a) are formed between a wall section (41) expanding toward the stator (1) and wedged elevations (42, 43) of the air conduction screen (27).

8. An electric motor according to claim 1 or 7, **characterized in that** outlet channels (50, 50a) parallel to the axis (4) are formed between the guide channels (48, 48a) and the outlets (51).

9. An electric motor according to one of claims 1 to 8, **characterized in that** the ventilator (24) is widely connected with the end shield (9) on the ventilator side.

## Revendications

1. Moteur électrique,
avec un stator (1) comportant un axe longitudinal médian (4) et un contour extérieur (14),
avec un arbre (6) disposé dans le stator (1) de façon concentrique à l'axe (4),
avec un flasque (8) situé du côté de la sortie d'arbre et un flasque (9) situé du côté du ventilateur, dans lesquels est logé l'arbre (6),
avec une bride (11) prévue sur le flasque (8) situé du côté de la sortie d'arbre, qui comporte des zones d'angle (15) faisant saillie du contour extérieur (14) du stator (1), et
avec un ventilateur (24) adjacent au flasque (9) situé du côté du ventilateur, comportant une roue (25) de ventilateur qui est couplée en liaison de rotation à l'arbre (6), et un capot (26) de ventilateur recouvrant le ventilateur (24) vers l'extérieur, la roue (25) de ventilateur étant agencée sous la forme d'un pot,
avec un tronçon de disque (28) s'étendant radialement par rapport à l'axe (4), et un tronçon tronconique (29) s'élargissant vers le stator (1), sur lesquels sont prévues des ailettes (31, 31a),
**caractérisé en ce que**
le ventilateur (24) comporte des orifices de sortie d'air (51) alignés avec les zones d'angle (15) de la bride (11), qui sont orientés vers le stator,
un transmetteur de valeur réelle (18) couplé à l'arbre (6) est prévu à proximité du flasque (9) situé du côté du ventilateur, lequel est entouré en forme de pot par le ventilateur (24),
un écran de déflection d'air (27) ne pouvant pas tourner par rapport au stator (1) est disposé entre la roue (25) de ventilateur et les orifices de sortie (51), lequel délimite des canaux de déflection (48, 48a) se rétrécissant en direction des orifices de sortie (51),
les bords latéraux (13) de la bride (11) s'étendent approximativement de façon tangentielle par rapport au contour extérieur (14) du stator (1),
un perçage (16) pour des vis de fixation est pratiqué dans chacune des zones d'angle (15) de la bride (11) faisant saillie du contour extérieur (14) du stator (1), et
le capot (26) de ventilateur ne dépasse pas des bords latéraux (13) de la bride (11).

2. Moteur électrique selon la revendication 1, **caractérisé en ce que** des canaux radiaux (35) sont formés entre le tronçon de disque (28), les ailettes (31) s'étendant radialement et une paroi frontale (34) du capot (26) de ventilateur, et **en ce que** des canaux radiaux / axiaux (37) se raccordant aux canaux radiaux (35) sont formés entre le tronçon tronconique (29), les ailettes (31a) fixées sur celui-ci et une paroi extérieure (36) du capot (26) de ventilateur.

3. Moteur électrique selon la revendication 2, **caractérisé en ce que** les canaux radiaux (35) ont une hauteur (a) constante en direction de l'axe (4).

4. Moteur électrique selon la revendication 2 ou 3, **caractérisé en ce que** la hauteur (b) des canaux radiaux / axiaux (37) se réduit en direction du stator (1).

5. Moteur électrique selon l'une quelconque des revendications 2 à 4, **caractérisé en ce que** la section transversale des canaux radiaux / axiaux (37) se réduit en direction du stator (1).

6. Moteur électrique selon la revendication 1, **caractérisé en ce que** les canaux de déflection (48, 48a) sont délimités vers l'extérieur par la paroi extérieure (36) du capot (26) de ventilateur.

7. Moteur électrique selon la revendication 1 ou 6, **caractérisé en ce que** les canaux de déflection (48, 48a) sont formés entre un tronçon de paroi (41) s'élargissant vers le stator (1) et des surélévations cunéiformes (42, 43) de l'écran de déflection d'air (27).

8. Moteur électrique selon la revendication 1 ou 7, **caractérisé en ce que** des canaux de sortie (50, 50a), s'étendant parallèlement à l'axe (4), sont formés entre les canaux de déflection (48, 48a) et les orifices de sortie (51).

9. Moteur électrique selon l'une quelconque des revendications 1 à 8, **caractérisé en ce que** le ventilateur (24) est relié par une grande surface au flasque (9) situé du côté du ventilateur.
